# EUROPEAN PATENT SPECIFICATION

(11) **EP 3 381 833 B1**
(45) Date of publication and mention of the grant of the patent: **01.06.2022**
(21) Application number: 16868848.9
(22) Date of filing: 22.11.2016
(51) Int. Cl.: B65D 51/00, B65D 51/24, B65D 21/08, B65D 25/10, B65D 85/00, A23B 7/12, B65D 51/26, B65D 25/28, A23L 19/20

(54) **KIMCHI PACKING CONTAINER HAVING FLEXIBILITY AND STANDARD FORM**
KIMCHI-VERPACKUNGSBEHÄLTER MIT FLEXIBILITÄT UND STANDARDFORM
RÉCIPIENT D'EMBALLAGE DE KIMCHI AYANT UNE FLEXIBILITÉ ET UNE FORME STANDARD

(30) Priority: 23.11.2015 KR 20150007596 U
(43) Date of publication of application: 03.10.2018
(73) Proprietor: CJ Cheiljedang Corporation, Seoul 04560 (KR)
(72) Inventor: SON, Seol Hee, Seoul 03499 (KR); KIM, Yul Joong, Seoul 08861 (KR)
(74) Representative: Dehns
(86) International application number: PCT/KR2016/013457
(87) International publication number: WO 2017/090952

(56) References cited:
- CN-U- 201 729 350
- JP-A- 2006 334 215
- KR-Y1- 200 269 865
- KR-Y1- 200 431 140
- US-B1- 6 478 181

## Description

### [Technical Field]

The invention relates to a kimchi packaging container with flexibility and firmness, comprising:an accommodation part formed in the shape of a pouch made of a flexible material;a connection part for maintaining the upper end of the accommodation part in an open state;a cover part for blocking the opening of the upper end of the connection part and pressing kimchi accommodated in the accommodation part with pressing plates provided on the bottom surface thereof and a support part for blocking the opening of the lower end of the accommodation part.

### [Background Art]

In the past, kimchi products (hereinafter, referred to as "kimchi") have been generally packaged in pouches made of flexible materials.

However, if kimchi is packaged in a pouch made of a flexible material and the pouch tilts or falls to any side during storage and transportation, some of the kimchi in the pouch cannot be immersed in the liquid thereof, resulting in yeast and mold formation, discoloration, physical deterioration and the like and thus deteriorating the quality of the kimchi.

In order to solve the problems, the present applicant has proposed a kimchi packaging container as disclosed in Korean Utility Model Registration No. 20-0431140, published on November 14, 2006, which discloses a kimchi packaging container according to the preamble of claim 1.

In the kimchi packaging container, the kimchi in a pouch part is pressed by pressing plates provided on the bottom surface of a cover part and thus immersed in the liquid thereof such that the quality of the kimchi can be easily maintained.

However, the conventional kimchi packaging container has a problem that the lower end of the pouch part, which is in contact with the bottom of a shelf and the like frequently, is easily damaged by external impact due to the material properties.

In addition, since the conventional kimchi packaging container is apt to be wrinkled or bent in the pouch part due to the material properties thereof, it is difficult to confirm the product information displayed on the outer surface thereof, thereby making it difficult for a consumer to select. Besides, since the shape of the lower end of the pouch part can be maintained and thus cannot be stacked, there is a further problem that it is difficult to store and transport kimchi.

Further, the conventional kimchi packaging container has a problem that when the pouch is brought into contact with the inner wall of a refrigerator during the refrigeration storage, the kimchi around the contact area is apt to be easily frozen, deteriorating the quality of the kimchi.

Also, in the conventional kimchi packaging container, the lower end of a connection part that is coupled with the cover part is located at a lower position than the lower ends of the pressing plates of the cover part. Therefore, if the kimchi storage amount in the pouch part is reduced to a certain level or less due to eating, a space is formed by the connection part between the lower ends of the pressing plates and the kimchi in the pouch part such that the kimchi cannot be pressed by the pressing plates, deteriorating the quality of the kimchi.

For the above reasons, in the related field, although there have been many development attempts to maintain the shape of the lower end of the pouch part so as to easily store and transport kimchi while preventing the deterioration of the quality of kimchi during the storage and transportation, no satisfactory results have been obtained so far.

### [Disclosure]

### [Technical Problem]

The disclosure has been made in view of the above circumstances and has an objective to provide a kimchi packaging container, which can solve the problem that the lower end of the pouch part is easily damaged by external impact in the conventional kimchi packaging containers.

In addition, the disclosure has another objective to provide a kimchi packaging container, which can solve the problem that the shape of the lower end of the pouch part cannot be maintained in the conventional kimchi packaging containers, resulting in the difficulty in the storage and transportation of kimchi.

Besides, the disclosure has still another objective to provide a kimchi packaging container, which can solve the problem of deteriorating the quality of kimchi due to the frequent freezing of kimchi in the pouch part during refrigerated storage of kimchi in the conventional kimchi packaging containers.

Further, the disclosure has a further objective to provide a kimchi packaging container, which can solve the problem of deteriorating the quality of kimchi due to the release of the pressure applied to kimchi by the pressing plate in the conventional kimchi packaging containers.

### [Technical Solution]

The invention is defined by a kimchi packaging container with flexibility and firmness, comprising: an accommodation part formed in the shape of a pouch made of a flexible material; a connection part for maintaining the upper end of the accommodation part in an open state; a cover part for blocking the opening of the upper end of the connection part and pressing kimchi accommodated in the accommodation part with pressing plates provided on the bottom surface thereof; a support part for blocking the opening of the lower end of the accommodation part and formed in a fixed shape so as to constantly maintain the shape of the lower end of the accommodation part; and a handle strap comprising two end portions, both end portions being formed with a plurality of coupling holes, wherein the connection part has first protrusions, which are formed on the outer surface of the connection part so as to face each other in the back and forth directions or in the right and left directions of the connection part, such that each one of the first protrusions is coupled to any one of the plurality of coupling holes formed in both end portions of the handle strap, and wherein the support part has second protrusions, which are formed on the outer surface of the support part so as to face each other in the back and forth directions or in the right and left directions of the support part, such that each one of the second protrusions is coupled to any one of the plurality of coupling holes formed in both end portions of the handle strap. Preferred embodiments are defined by dependent claims 2-10.

The accommodation part may be formed of vinyl or a synthetic resin film, which is transparent or translucent.

The connection part is provided such that the outer or inner circumference thereof is fused to the inner or outer circumference of upper end of the accommodation part.

The connection part has a protruding edge, which protrudes outwards on the outer circumference thereof.

The connection part may be formed of a synthetic resin injection molding.

The cover part has a coupling protrusion, which protrudes inwards on the inner circumference thereof.

The cover part may be formed of a synthetic resin injection molding.

The pressing plate has a lower end positioned at the lower position than the lower end of the connection part in a state, in which the cover part is coupled to the connection part.

The support part is provided such that the outer or inner circumference thereof is fused to the inner or outer circumference of the lower end of the accommodation part.

The support part is formed in a shape and size to accommodate the connection part and the cover part.

The support part may be formed in any one of a circular shape, an elliptical shape, and a polygonal shape.

The support part has a wall member extending upwards at a predetermined height from the edge of the bottom surface.

The wall member includes a plurality of extension pieces, which protrude in the upward direction.

The support part may be formed of a synthetic resin injection molding.

### [Advantageous Effects]

As for the kimchi packaging container with flexibility and firmness according to the disclosure, the lower end of the accommodation part is coupled to the support part, which has a fixed shape, such that the lower end of the accommodation part is protected by the support part and simultaneously the shape of the lower end of the accommodation part is uniformly maintained such that the lower end of the accommodation part can be prevented from being damaged and the storage and transportation of kimchi can be facilitated.

In addition, as for the kimchi packaging container with flexibility and firmness according to the disclosure, the lower end of the pressing plate is positioned at a lower position than the lower end of the connection part and the support part can accommodate the connection part and cover part, the pressure applied to the kimchi by the plate can be maintained continuously such that the deterioration of the quality of kimchi can be prevented.

### [Description of Drawings]

Fig. 1 is a perspective view showing the appearance of a kimchi packaging container with flexibility and firmness according to the disclosure.
Fig. 2 is an exploded perspective view illustrating the structure of the kimchi packaging container with flexibility and firmness according to the disclosure.
Fig. 3 is a coupled state cross-sectional view for explaining the structure of the kimchi packaging container with flexibility and firmness according to the disclosure.
Fig. 4 is a perspective view showing a modified form of a support part in the kimchi packaging container with flexibility and firmness according to the disclosure.
Fig. 5 is an illustration for explaining kimchi pressurization through the pressing plates of a cover part in the kimchi packaging container with flexibility and firmness according to the disclosure.
Fig. 6 is an illustration for explaining the accommodation of the cover part and a connection part through the support part in the kimchi packaging container with flexibility and firmness according to the disclosure.
Fig. 7 is an illustration showing the kimchi packaging container with flexibility and firmness, to which a handle strap is coupled, and
Fig. 8 is another illustration showing the kimchi packaging container with flexibility and firmness, to which a handle strap is coupled.

**Brief Explanation of Reference Symbols**

| | | | |
|---|---|---|---|
| 10: | accommodation part | 20: | connection part |
| 21: | protruding edge | 22: | protrusion |
| 30: | cover part | 31: | pressing plate |
| 32: | coupling protrusion | 40: | support part |
| 41: | protrusion | 40a: | bottom surface |
| 40b: | wall member | 40c: | extension piece |
| 50: | handle strap | 51: | coupling hole |
| 100: | kimchi | A: | kimchi packaging container |

### [Best Mode for Carrying out the Invention]

Hereinafter, the present invention will be described in detail in accordance with preferred embodiments thereof with reference to the accompanying drawings.

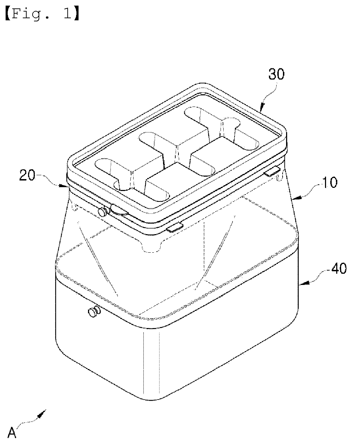

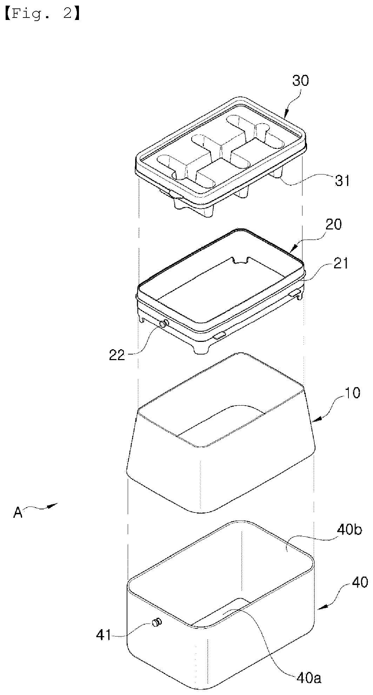

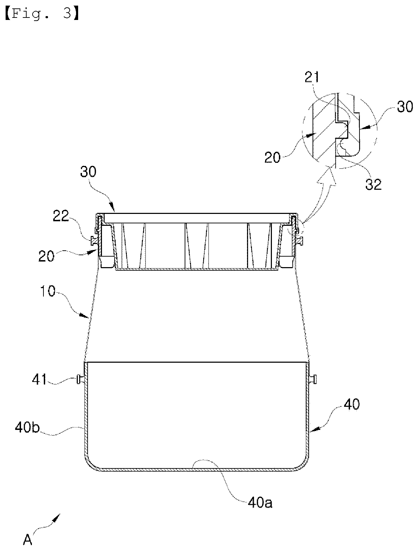

As shown in Fig. 1 to Fig. 3, a kimchi packaging container A with flexibility and firmness according to the disclosure includes an accommodation part 10, a connection part 20, a cover part 30, and a support part 40.

The accommodation part 10 is formed in the shape of a pouch made of a flexible material.

The accommodation part 10 is formed in an open shape with an upper portion and a lower portion.

As the upper portion and the lower portion of the accommodation part 10 are formed in the open shape, the connection part 20 can be coupled to the upper end of the accommodation part 10 and the support part 40 can be coupled to the lower end of the accommodation part 10.

Meanwhile, the accommodation part 10 may be formed of vinyl or a synthetic resin film, which is transparent or translucent.

As the accommodation part 10 is formed of vinyl or a synthetic resin film, which is transparent or translucent, it is possible to visually confirm the kimchi 100 accommodated inside the accommodation part 10 from the outside of the accommodation part 10 due to the material properties thereof.

The connection part 20 maintains the upper end of the accommodation part 10 open.

It is preferable that the outer or inner circumference of the connection part 20 is fused to the inner or outer circumference of the upper end of the accommodation part 10.

As the outer or inner circumference of the connection part 20 is fused to the inner or outer circumference of the upper end of the accommodation part 10, the liquid and the like of the kimchi 100 are prevented from leaking between the connection part 20 and the accommodation part 10.

Further, it is preferable that the connection part 20 includes a protruding edge 21 which protrudes outwards on the outer circumference thereof.

As the connection part 20 has the protruding edge 21, the connection part 20 and the cover part 30 can be coupled to each other in such a manner that the protruding edge 21 is caught by a coupling protrusion 32 formed on the cover part 30, which is described below.

In addition, connection part 20 includes protrusions 22 formed on the outer surface of the connection part 20 and the protrusions 22 face each other in the back and forth directions or in the right and left directions of the connection part 20.

As the connection part 20 includes the protrusions 22, a handle strap 50 is coupled to the connection part 20 in such a manner that any one of a plurality of coupling holes 51, which are provided in both end portions of the handle strap 50, is coupled to each of the protrusions 22.

The connection part 20 may be formed of a synthetic resin injection molding.

As the connection part 20 is formed of a synthetic resin injection molding, the durability of the connection part 20 can be stabilized and the connection part 20 is easily prepared.

The cover part 30 blocks the opening of the upper end of the connection part 20 and presses the kimchi 100 accommodated in the accommodation part 10 through the pressing plates 31 on the bottom surface thereof.

It is preferable that the cover part 30 as above includes a coupling protrusion 32 which protrudes inwards on the inner circumference thereof.

As the cover part 30 includes the coupling protrusion 32, the cover part 30 can be coupled to the connection part 20 in such a manner that the protruding edge 21 provided on the connection part 20 is caught by the coupling protrusion 32.

The cover part 30 may be formed of a synthetic resin injection molding.

As the cover part 30 is formed of a synthetic resin injection molding, the durability of the cover part 30 can be stabilized and the cover part 30 is easily prepared.

Meanwhile, in the cover part 30, the pressing plate 31 may be of any normal shape so long as the pressing plate 31 can press the kimchi 100 in the accommodation part 10.

However, it is preferable that the lower end of the pressing plate 31 is located at a lower position than the lower end of the connection part 20 in a state, in which the cover part 30 is coupled to the connection part 20.

Since the lower end of the pressing plate 31 is located at a lower position than the lower end of the connection part 20, thereby preventing the generation of a space between the pressing plate 31 and the kimchi 100 in the accommodation part 10 due to the connection part 20, the kimchi 100 is continuously applied with pressure by the pressing plate 31 in the accommodation part 10.

The support part 40 blocks the opening of the lower end of the accommodation part 10 and has a fixed shape so as to constantly maintain the shape of the lower end of the accommodation part 10.

It is preferable that the outer or inner circumference of the support part 40 is fused to the inner or outer circumference of the lower end of the accommodation part 10.

As the outer or inner circumference of the support part 40 is fused to the inner or outer circumference of the lower end of the accommodation part 10, the liquid and the like of the kimchi 100 are prevented from leaking between the support part 40 and the accommodation part 10.

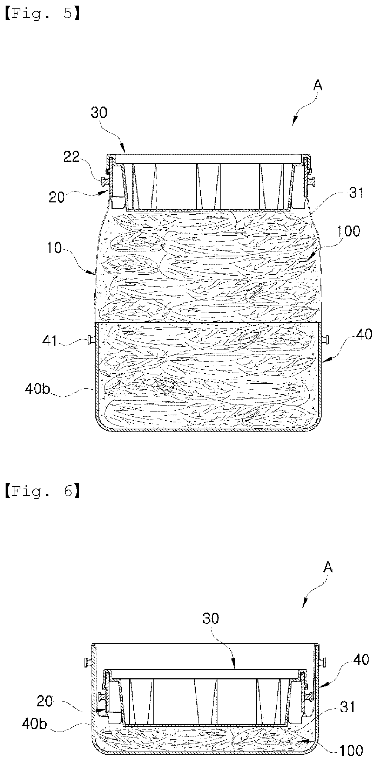

In addition, it is preferable that the support part 40 is formed in a shape and size such that the connection part 20 and the cover part 30 can be accommodated in the support part 40, as shown in Fig. 6.

When the connection part 20 and the cover part 30 are accommodated in the support part 40, even if the kimchi 100 is left adjacent to the bottom of the support part 40, the kimchi 100 can be pressed by the pressing plates 31. Thus, regardless of the storage amount of the kimchi 100, the quality of the kimchi 100 can be maintained.

Herein, the support part 40 may be formed in any one shape capable of accommodating the connection part 20 and the cover part 30, for example, a circular shape, an elliptical shape, or a polygonal shape.

In addition, the support part 40 includes protrusions 41 formed on the outer surface of the support part 40 and the protrusions 41 face each other in the back and forth directions or in the right and left directions of the support part 40.

As the support part 40 includes the protrusions 41, the handle strap 50 is coupled to the support part 40 in such a manner that any one of a plurality of coupling holes 51, which are provided in both end portions of the handle strap 50, is coupled to each of the protrusion 41.

The support part 40 may be formed of a synthetic resin injection molding.

As the support part 40 is formed of a synthetic resin injection molding, the durability of the support part 40 can be stabilized and the support part 40 is easily prepared.

In addition, it is preferable that the support part 40 includes a wall member 40b extending upwards at a constant height from the edge of the bottom surface 40a.

As the support part 40 includes the wall member 40b, a certain amount of the kimchi 100 can be accommodated in the support part 40.

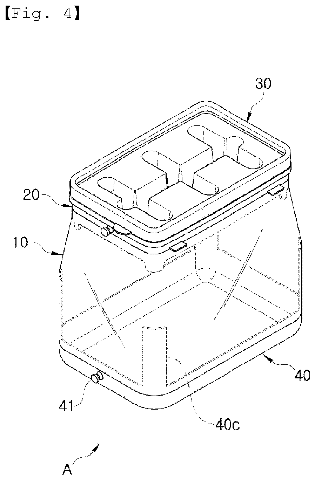

Meanwhile, the wall member 40b may include a plurality of extension pieces 40c protruding upwards, as another example of the support part 40 as shown in Fig. 4.

As the wall member 40b has the extension pieces 40c, the shape of the accommodation part 10 is further maintained by the extension pieces 40c.

The following is a detailed description of the kimchi packaging container A with flexibility and firmness (hereinafter, referred to as "container") with respect to the packaging of the kimchi 100.

According to the disclosure, the accommodation part 10 is formed in the shape of a pouch made of a flexible material and has flexibility in terms of the material properties thereof. Due to the flexibility of the accommodation part 10, as the accommodation part 10 is lowered down by the load of the connection part 20 and the cover part 30, the lower ends of the pressing plates 31 are brought into contact with the kimchi 100 so that the pressing of the kimchi 100 can be pressed by the pressing plates 31, as shown in Fig. 5.

Therefore, even if a small amount of kimchi 100 is initially put in the accommodation part 10, that is, a small amount of kimchi 100 is packaged, or some of the kimchi 100 in the accommodation part 10 is withdrawn and eaten, the kimchi 100 in the accommodation part 10 can be still maintained under pressure through the pressing plates 31, thereby uniformly maintaining the quality of the kimchi 100.

However, since the accommodation part 10 is formed in the shape of a pouch made of a flexible material, damage to the lower end of the accommodation part 10 may occur and, in particular, the accommodation part 10 may move, be tilted or fall to a side. In this case, it is not easy to put the accommodation part 10 upright or stack the same, resulting in the difficulty in the storage and transportation of the kimchi 100.

However, according to the disclosure, the accommodation part 10 is coupled to the support part 40, which is in a fixed shape, with the lower end thereof, such that the lower end of the accommodation part 10 is protected by the support part 40 and the shape of the lower end of the accommodation part 10 is uniformly maintained. Therefore, it is possible to put the accommodation part 10 upright or stack the same through the support part 40 and thus the storage and transportation of the kimchi 100 can be facilitated.

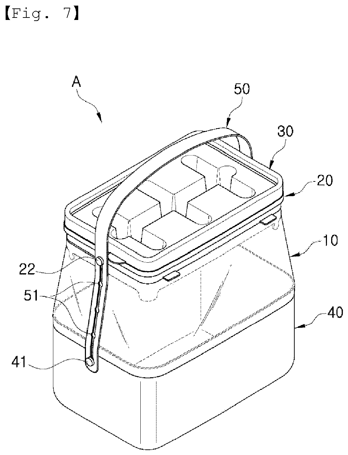

Meanwhile, the connection part 20 and the support part 40, according to the disclosure, have the protrusions 22 and 41, respectively, such that the handle strap 50 can be coupled by means of the protrusions 22 and 41, as shown in Fig. 7. By using the handle strap 50, the kimchi 100 can be more easily stored and transported.

However, when the coupling state of the handle strap 50 with respect to the connection part 20 and the support part 40 is fixed, a gap between the lower end of the connection part 20 and the upper part of the support part 40 is also fixed such that the storage capacity of the kimchi 100 may be limited in the accommodation part 10.

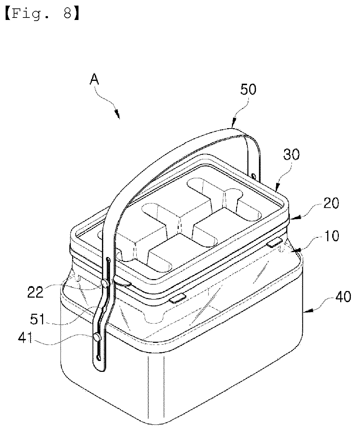

However, according to the disclosure, each of the protrusions 22 is coupled to any one of the plurality of coupling holes 51 provided in the handle strap 50. Therefore, an interval between the lower end of the connection part 20 and the upper end of the support part 40 can be adjusted by selecting any one of the plurality coupling holes 51 and coupling each of the protrusions 22 thereto such that the storage capacity of the kimchi 100 through the accommodation part 10 can be changed, as shown in Fig. 8. Therefore, according to the disclosure, the kimchi 100 can be packaged in various capacities in the container A.

As for the kimchi packaging container with flexibility and firmness according to the disclosure described hereinabove, the support part 40 in a fixed shape is coupled to the lower end of the accommodation part 10 such that the lower end of the accommodation part 10 is protected by the support part 40 and simultaneously the shape of the lower end of the accommodation part 10 is constantly maintained by the support part 40, thereby preventing the damage to the lower end of the accommodation part 10 and facilitating the storage and transportation of the kimchi 100. Besides, since the lower ends of the pressing plates 31 are located at a lower position that the lower end of the connection part 20 and the support part 40 can accommodate the connection part 20 and the cover part 30, the kimchi 100 can be continuously maintained under pressure by the pressing plates 31 without deterioration of the quality thereof.

## Claims

1. A kimchi packaging container (A) with flexibility and firmness, comprising:
an accommodation part (10) formed in the shape of a pouch made of a flexible material;
a connection part (20) for maintaining the upper end of the accommodation part (10) in an open state;
a cover part (30) for blocking the opening of the upper end of the connection part (20) and pressing kimchi (100) accommodated in the accommodation part (10) with pressing plates (31) provided on the bottom surface thereof;
a support part (40) for blocking the opening of the lower end of the accommodation part (10), **characterized in that** said support part (40) is formed in a fixed shape so as to constantly maintain the shape of the lower end of the accommodation part; and **in that** said kimchi packaging container (A) comprises
a handle strap (50) comprising two end portions, both end portions being formed with a plurality of coupling holes (51),
wherein the connection part (20) has first protrusions (22), which are formed on the outer surface of the connection part (20) so as to face each other in the back and forth directions or in the right and left directions of the connection part (20), such that each one of the first protrusions (22) is coupled to any one of the plurality of coupling holes (51) formed in both end portions of the handle strap (50), and
wherein the support part (40) has second protrusions (41), which are formed on the outer surface of the support part (40) so as to face each other in the back and forth directions or in the right and left directions of the support part, such that each one of the second protrusions (41) is coupled to any one of the plurality of coupling holes (51) formed in both end portions of the handle strap (50).

2. The kimchi packaging container with flexibility and firmness according to claim 1, wherein the accommodation part (10) is formed of vinyl or a synthetic resin film, which is transparent or translucent.

3. The kimchi packaging container with flexibility and firmness according to claim 1, wherein the connection part (20) is provided such that the outer or inner circumference thereof is fused to the inner or outer circumference of the upper end of the accommodation part (10).

4. The kimchi packaging container with flexibility and firmness according to claim 1, wherein the connection part (20) has a protruding edge, which protrudes outwards on the outer circumference thereof.

5. The kimchi packaging container with flexibility and firmness according to claim 1, wherein the cover part (30) has a coupling protrusion (32), which protrudes inwards on the inner circumference thereof.

6. The kimchi packaging container with flexibility and firmness according to claim 1, wherein the pressing plate (31) has a lower end positioned at the lower position than the lower end of the connection part (20) in a state, in which the cover part (30) is coupled to the connection part (20).

7. The kimchi packaging container with flexibility and firmness according to claim 1, wherein the support part (40) is provided such that the outer or inner circumference thereof is fused to the inner or outer circumference of the lower end of the accommodation part (10).

8. The kimchi packaging container with flexibility and firmness according to claim 1, wherein the support part (40) is formed in a shape and size to accommodate the connection part (20) and the cover part (30).

9. The kimchi packaging container with flexibility and firmness according to claim 1, wherein the support part (40) has a wall member (40b) extending upwards from the edge of the bottom surface (40a) at a predetermined height.

10. The kimchi packaging container with flexibility and firmness according to claim 9, wherein the wall member (40b) includes a plurality of extension pieces (40c), which protrude in the upward direction.

## Patentansprüche

1. Kimchi-Verpackungsbehälter (A) mit Flexibilität und Standform, umfassend:
ein Unterbringungsteil (10), ausgebildet in der Form eines aus einem flexiblen Material hergestellten Beutels;
ein Verbindungsteil (20), um das obere Ende des Unterbringungsteils (10) in einem offenen Zustand zu halten;
ein Abdeckungsteil (30) zum Blockieren der Öffnung des oberen Endes des Verbindungsteils (20) und Zusammendrücken des im Unterbringungsteil (10) untergebrachten Kimchi (100) mit auf der Bodenfläche davon bereitgestellten Druckplatten (31);
ein Stützteil (40) zum Blockieren der Öffnung des unteren Endes des Unterbringungsteils (10), **dadurch gekennzeichnet, dass** das Stützteil (40) in einer festen Form ausgebildet ist, um konstant die Form des unteren Endes des Unterbringungsteils zu halten; und dadurch, dass der Kimchi-Verpackungsbehälter (A) umfasst:
ein Griffband (50), umfassend zwei Endabschnitte, wobei beide Endabschnitte mit einer Vielzahl von Kopplungslöchern (51) ausgebildet sind,
wobei das Verbindungsteil (20) erste Vorsprünge (22) aufweist, die an der äußeren Oberfläche des Verbindungsteils (20) ausgebildet sind, um einander in der Rückwärts- und Vorwärtsrichtung oder in der Rechts- und Linksrichtung des Verbindungsteils (20) zugewandt zu sein, sodass jeder eine der ersten Vorsprünge (22) mit einem beliebigen von der Vielzahl von in beiden Endabschnitten des Griffbands (50) ausgebildeten Kopplungslöchern (51) gekoppelt ist, und
wobei das Stützteil (40) zweite Vorsprünge (41) aufweist, die an der äußeren Oberfläche des Stützteils (40) ausgebildet sind, um einander in der Rückwärts- und Vorwärtsrichtung oder in der Rechts- und Linksrichtung des Stützteils zugewandt zu sein, sodass jeder eine der zweiten Vorsprünge (41) mit einem beliebigen von der Vielzahl von in beiden Endabschnitten des Griffbands (50) ausgebildeten Kopplungslöchern (51) gekoppelt ist.

2. Kimchi-Verpackungsbehälter mit Flexibilität und Standform nach Anspruch 1, wobei das Unterbringungsteil (10) aus Vinyl oder einer Kunstharzfolie, die transparent oder transluzent ist, ausgebildet ist.

3. Kimchi-Verpackungsbehälter mit Flexibilität und Standform nach Anspruch 1, wobei das Verbindungsteil (20) so bereitgestellt ist, dass sein Außen- oder Innenumfang mit dem Innen- oder Außenumfang des oberen Endes des Unterbringungsteils (10) verschmolzen ist.

4. Kimchi-Verpackungsbehälter mit Flexibilität und Standform nach Anspruch 1, wobei das Verbindungsteil (20) eine vorstehende Kante aufweist, die an seinem Außenumfang nach außen vorsteht.

5. Kimchi-Verpackungsbehälter mit Flexibilität und Standform nach Anspruch 1, wobei das Abdeckungsteil (30) einen Kopplungsvorsprung (32) aufweist, der an seinem Innenumfang nach innen vorsteht.

6. Kimchi-Verpackungsbehälter mit Flexibilität und Standform nach Anspruch 1, wobei die Druckplatte (31) ein tieferes Ende aufweist, das in einem Zustand, in dem das Abdeckungsteil (30) mit dem Verbindungsteil (20) gekoppelt ist, an der tieferen Position als das untere Ende des Verbindungsteils (20) positioniert ist.

7. Kimchi-Verpackungsbehälter mit Flexibilität und Standform nach Anspruch 1, wobei das Stützteil (40) so bereitgestellt ist, dass sein Außen- oder Innenumfang mit dem Innen- oder Außenumfang des unteren Endes des Unterbringungsteils (10) verschmolzen ist.

8. Kimchi-Verpackungsbehälter mit Flexibilität und Standform nach Anspruch 1, wobei das Stützteil (40) in einer Form und Größe ausgebildet ist, um das Verbindungsteil (20) und das Abdeckungsteil (30) aufzunehmen.

9. Kimchi-Verpackungsbehälter mit Flexibilität und Standform nach Anspruch 1, wobei das Stützteil (40) ein Wandelement (40b) aufweist, das sich vom Rand der Bodenfläche (40a) in einer vorbestimmten Höhe nach oben erstreckt.

10. Kimchi-Verpackungsbehälter mit Flexibilität und Standform nach Anspruch 9, wobei das Wandelement (40b) eine Vielzahl von Verlängerungsteilen (40c) umfasst, die in der Aufwärtsrichtung vorstehen.

## Revendications

1. Récipient d'emballage de kimchi (A) avec une flexibilité et une fermeté, comprenant :
une partie de logement (10) formée selon la forme d'une poche réalisée en un matériau flexible ;
une partie de liaison (20) pour le maintien de l'extrémité supérieure de la partie de logement (10) dans un état ouvert ;
une partie de couvercle (30) pour le blocage de l'ouverture de l'extrémité supérieure de la partie de liaison (20) et le pressage du kimchi (100) logé dans la partie de logement (10) avec des plaques de pressage (31) prévues sur la surface inférieure de celle-ci ;
une partie de support (40) pour le blocage de l'ouverture de l'extrémité inférieure de la partie de logement (10), **caractérisé en ce que** ladite partie de support (40) est formée selon une forme fixe de sorte à maintenir constamment la forme de l'extrémité inférieure de la partie de logement ; et **en ce que** ledit récipient d'emballage de kimchi (A) comprend
une bande de poignée (50) comprenant deux portions d'extrémité, les deux portions d'extrémité étant formées avec une pluralité de trous de couplage (51),
dans lequel la partie de liaison (20) présente des premières saillies (22) qui sont formées sur la surface extérieure de la partie de liaison (20) de sorte à se faire face les unes les autres dans les directions d'avant en arrière ou dans les directions de gauche à droite de la partie de liaison (20), de sorte que chacune des premières saillies (22) soit couplée à l'un quelconque de la pluralité de trous de couplage (51) formés dans les deux portions d'extrémité de la bande de poignée (50), et
dans lequel la partie de support (40) présente des secondes saillies (41) qui sont formées sur la surface extérieure de la partie de support (40) de sorte à se faire face les unes les autres dans les directions d'avant en arrière ou dans les directions de gauche à droite de la partie de support, de sorte que chacune des secondes saillies (41) soit couplée à l'une quelconque de la pluralité de trous de couplage (51) formés dans les deux portions d'extrémité de la bande de poignée (50).

2. Récipient d'emballage de kimchi avec une flexibilité et une fermeté selon la revendication 1, dans lequel la partie de logement (10) est formée de vinyle ou d'un film de résine synthétique qui est transparent ou translucide.

3. Récipient d'emballage de kimchi avec une flexibilité et une fermeté selon la revendication 1, dans lequel la partie de liaison (20) est prévue de sorte que la circonférence extérieure ou intérieure de celle-ci soit fondue sur la circonférence intérieure ou extérieure de l'extrémité supérieure de la partie de logement (10).

4. Récipient d'emballage de kimchi avec une flexibilité et une fermeté selon la revendication 1, dans lequel la partie de liaison (20) présente une arête en saillie, qui fait saillie vers l'extérieur sur la circonférence extérieure de celle-ci.

5. Récipient d'emballage de kimchi avec une flexibilité et une fermeté selon la revendication 1, dans lequel la partie de couvercle (30) présente une saillie de couplage (32) qui fait saillie vers l'intérieur sur la circonférence intérieure de celle-ci.

6. Récipient d'emballage de kimchi avec une flexibilité et une fermeté selon la revendication 1, dans lequel la plaque de pressage (31) présente une extrémité inférieure positionnée dans la position inférieure à celle de l'extrémité inférieure de la partie de liaison (20) dans un état, dans lequel la partie de couvercle (30) est couplée à la partie de liaison (20).

7. Récipient d'emballage de kimchi avec une flexibilité et une fermeté selon la revendication 1, dans lequel la partie de support (40) est prévue de sorte que la circonférence extérieure ou intérieure de celle-ci soit fondue sur la circonférence intérieure ou extérieure de l'extrémité inférieure de la partie de logement (10).

8. Récipient d'emballage de kimchi avec une flexibilité et une fermeté selon la revendication 1, dans lequel la partie de support (40) est formée selon une forme et une taille destinées à loger la partie de liaison (20) et la partie de couvercle (30).

9. Récipient d'emballage de kimchi avec une flexibilité et une fermeté selon la revendication 1, dans lequel la partie de support (40) présente un élément de paroi (40b) s'étendant vers le haut depuis l'arête de la surface inférieure (40a) à une hauteur prédéterminée.

10. Récipient d'emballage de kimchi avec une flexibilité et une fermeté selon la revendication 9, dans lequel l'élément de paroi (40b) comporte une pluralité de pièces d'extension (40c) qui font saillie dans la direction vers le haut.
